# EUROPÄISCHE PATENTSCHRIFT

(11) **EP 1 969 242 B1**
(45) Veröffentlichungstag und Bekanntmachung des Hinweises auf die Patenterteilung: **30.06.2010**
(21) Anmeldenummer: 06829369.5
(22) Anmeldetag: 07.12.2006
(51) Int. Cl.: F16B 21/02

(54) **VORRICHTUNG ZUM BEFESTIGEN EINES ANBAUTEILES AN EINEM TRÄGERTEIL**
DEVICE FOR FASTENING AN ADD-ON PART TO A SUPPORT PART
DISPOSITIF DE FIXATION D'UN COMPOSANT SUR UNE PIECE DE SUPPORT

(30) Priorität: 30.12.2005 DE 102005063028
(43) Veröffentlichungstag der Anmeldung: 17.09.2008
(73) Patentinhaber: A. RAYMOND ET CIE, 38000 Grenoble (FR)
(72) Erfinder: SPITZ, Uwe, 79618 Rheinfelden (DE)
(74) Vertreter: Rüttgers, Joachim
(86) Internationale Anmeldenummer: PCT/EP2006/011745
(87) Internationale Veröffentlichungsnummer: WO 2007/079848

(56) Entgegenhaltungen:
- DE-A1- 3 524 651
- US-A- 3 220 078
- US-A1- 2005 095 080
- US-B1- 6 237 970

## Beschreibung

Die Erfindung betrifft eine Vorrichtung gemäß dem Oberbegriff des Patentanspruches 1.

Eine derartige Vorrichtung ist aus DE 35 24 651 A1 bekannt. Die vorbekannte Vorrichtung zum Befestigen eines Anbauteiles an einem Trägerteil verfügt über eine in einer Ausnehmung in dem Trägerteil zu positionierende Befestigungsklammer, die mit einer Deckplatte und zwei an einander gegenüberliegenden Seiten der Deckplatte angeordneten Klammerarmen ausgebildet ist. Jeder Klammerarm weist einen an der Deckplatte angesetzten Innenschenkel und einen Außenschenkel auf, wobei der Außenschenkel über einen umgebogenen Abschnitt mit dem Innenschenkel verbunden ist und sich mit einem dem umgebogenen Abschnitt gegenüberliegenden freien Ende bis in den Bereich der Deckplatte erstreckt. Weiterhin ist eine Eingriffseinheit in Gestalt einer Schraube vorhanden, die mit der Befestigungsklammer und dem Anbauteil in Eingriff bringbar ist. Dabei greift die Schraube durch eine Ausnehmung in dem Anbauteil durch und kommt mit einem in der Deckplatte ausgebildeten Gewindebereich in Eingriff, wobei sich die umgebogenen Abschnitte der freien Enden der Außenschenkel an der dem Anbauteil gegenüberliegenden Rückseite des Trägerteiles abstützen.

Bei Anziehen der Schraube spreizen sich in der Regel bei korrekter Anordnung der Deckplatte sowie der Außenschenkel die Außenschenkel nach außen ab und erhöhen dadurch die Auszugsfestigkeit der vorbekannten Vorrichtung. Allerdings ist dadurch der Befestigungsvorgang verhältnismäßig zeitraubend, da die Schraube in einer Vielzahl von Umdrehungen eingeschraubt werden muss.

Der Erfindung liegt die Aufgabe zugrunde, eine Vorrichtung der eingangs genannten Art anzugeben, mit der ein Anbauteil sehr rationell und zuverlässig mit einem Trägerteil verbindbar und wieder lösbar ist.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung die Befestigungsklammer in einem Aufnahmeraum des Lagerteiles zwischen einer Verriegelungsstellung und einer Freigabestellung drehbar gelagert ist, lassen sich durch eine Drehung der Befestigungsklammer um beispielsweise 90 Grad die Klammerarme so anordnen, dass die Verbindung zwischen dem Anbauteil und dem Trägerteil hergestellt oder auch wieder gelöst ist.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung mit einer Befestigungsklammer in einer Einlegestellung,
- Fig. 2: in einer perspektivischen Ansicht die Befestigungsklammer des Ausführungsbeispiels gemäß Fig. 1,
- Fig. 3: in einer perspektivischen Ansicht das Ausführungsbeispiel gemäß Fig. 1 und Fig. 2 mit einer Deckplatte der Befestigungsklammer in einer Freigabestellung und
- Fig. 4: in einer perspektivischen Ansicht das Ausführungsbeispiel gemäß Fig. 1 und Fig. 2 mit der Deckplatte der Befestigungsklammer in einer Verriegelungsstellung.

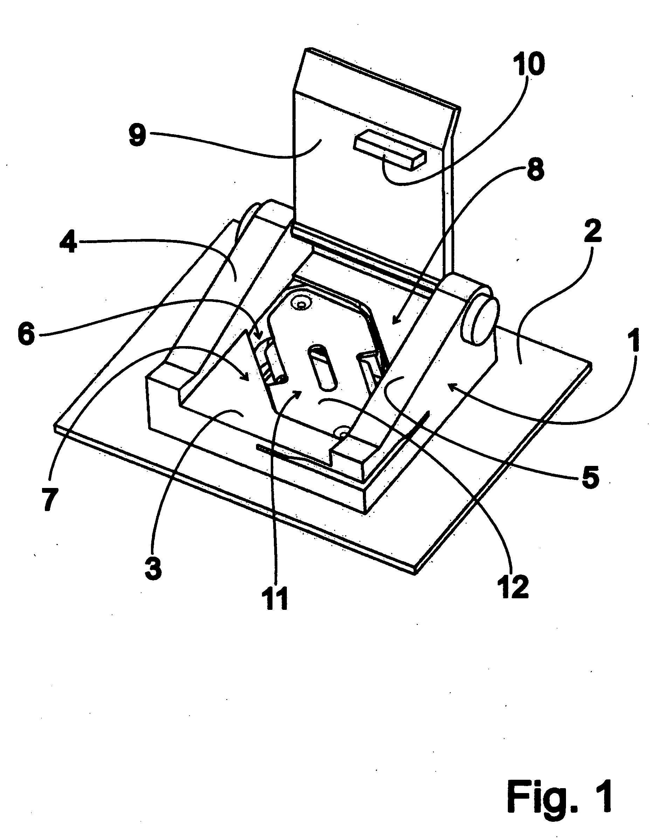

Fig. 1 zeigt in einer perspektivischen Ansicht ein Ausführungsbeispiel einer erfindungsgemäßen Vorrichtung zum Verbinden eines mit einem Lagerteil 1 der erfindungsgemäßen Vorrichtung verbundenen Anbauteil 2 mit einem in Fig. 1 nicht dargestellten Trägerteil. Das Lagerteil 1 ist mit einer Grundplatte 3 ausgebildet, an die an einander gegenüberliegenden Randseiten über die Grundplatte 3 hinausragende Seitenwände 4, 5 angeformt sind. Die Grundplatte 3 ist mit einem in der Regel im Wesentlichen rechteckförmigen, wie bei diesem Ausführungsbeispiel jedoch auch quadratischen Klammeraufnahmeraum 6 als Aufnahmeraum ausgebildet, in dem diagonal einander gegenüberliegende Eckabschnitte 7, 8 als Teil von Eingriffstrukturen hineinragen und der dadurch eine um 45 Grad gegenüber den Seitenrändern der rechteckförmigen Grundplatte 3 verdrehte Ausrichtung erhält.

An den Seitenwänden 4, 5 des Lagerteiles 1 ist eine schwenkbare Abdeckklappe 9 gelagert, die über eine quaderförmige Blockierrippe 10 als Blockiervorsprung verfügt. Die Abdeckklappe 9 ist so ausgebildet, dass sie in eine mit den von der Grundplatte 3 wegweisenden Deckseiten der Seitenwände 4, 5 bündig abschließende Schließstellung schwenkbar ist, in der dann die Blockierrippe 10 in den Aufnahmeraum 6 hineinragt.

Weiterhin lässt sich Fig. 1 entnehmen, dass die erfindungsgemäße Vorrichtung über eine aus einem gestanzten Blech hergestellte Befestigungsklammer 11 verfügt, die mit einer an die Außenkontur des Klammeraufnahmeraumes 6 angepassten, flachen Deckplatte 12 ausgebildet ist. Die Befestigungsklammer 11 ist in der Anordnung gemäß Fig. 1 in einer Einlegestellung in dem Klammeraufnahmeraum 6 des Lagerteiles 1 angeordnet, in der die äußeren Randseiten der Deckplatte 12 den den Klammeraufnahmeraum 6 begrenzenden inneren Randseiten der Grundplatte 3 parallel gegenüberliegend angeordnet sind.

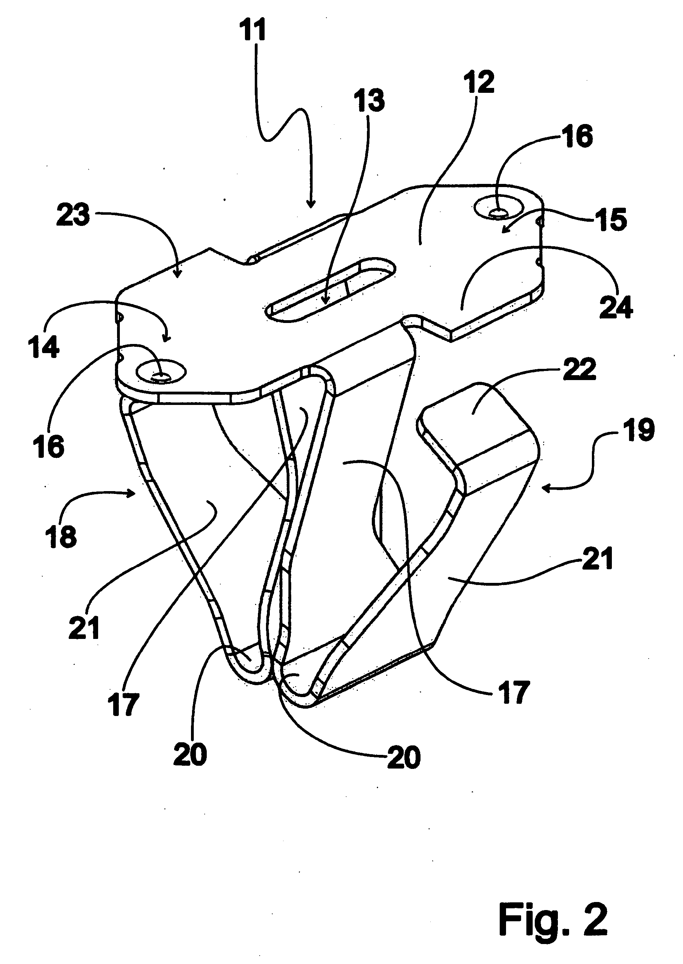

Fig. 2 zeigt in einer perspektivischen Ansicht die Befestigungsklammer 11 des Ausführungsbeispiels gemäß Fig. 1. Aus Fig. 2 ist ersichtlich, dass in der im Wesentlichen länglich mit einer rechteckförmigen Grundform ausgebildeten Deckplatte 12 im Mittenbereich eine Konturausnehmung 13 in Gestalt eines Längsschlitzes ausgebildet ist, die komplementär zu der Blockierrippe 10 ausgeformt ist. Die Deckplatte 12 verfügt endseitig über Randabschnitte 14, 15 mit in einen Winkel von in etwa 90 Grad symmetrisch zu der Längsachse aufeinander zu laufenden Schrägrändern, wobei im endseitigen Bereich der Randabschnitte 14, 15 Rastsicken 16 als Teil von Eingriffstrukturen ausgebildet sind, die von einer Seite der Deckplatte 12 überstehen.

An zwei gegenüberliegende Randseiten der Deckplatte 12 sind jeweils ein Innenschenkel 17 eines ersten Klammerarmes 18 und eines zweiten Klammerarmes 19 angeformt, wobei sich die Innenschenkel 17 der Klammerarme 18, 19 von der Deckplatte 12 wegweisend aufeinander zu erstrecken und an ihrem von der Deckplatte 12 abgewandten Ende jeweils in einen Umbiegungsabschnitt 20 übergehen, an die wiederum jeweils ein Außenschenkel 21 eines Klammerarmes 18, 19 angeformt ist. Die Außehschenkel 21 erstrecken sich von dem jeweiligen Umbiegungsabschnitt 20 in Richtung der Deckplatte 12, wobei jeweils ein dem Umbiegungsabschnitt 20 gegenüberliegender Endabschnitt 22 jedes Außenschenkels 21 in etwa rechtwinklig in Richtung der Deckplatte 12 weisend umgebogen ist.

Die Deckplatte 12 ist weiterhin mit Seitenlappen 23, 24 ausgebildet, die in Bezug auf die Konturausnehmung 13 diametral einander gegenüberliegen und sich jeweils in Richtung eines Außenschenkels 21 eines Klammerarmes 18, 19 erstrecken sowie zwischen einem Innenschenkel 17 des jeweiligen Klammerarmes 18, 19 und einem Randabschnitt 14, 15 angeordnet sind.

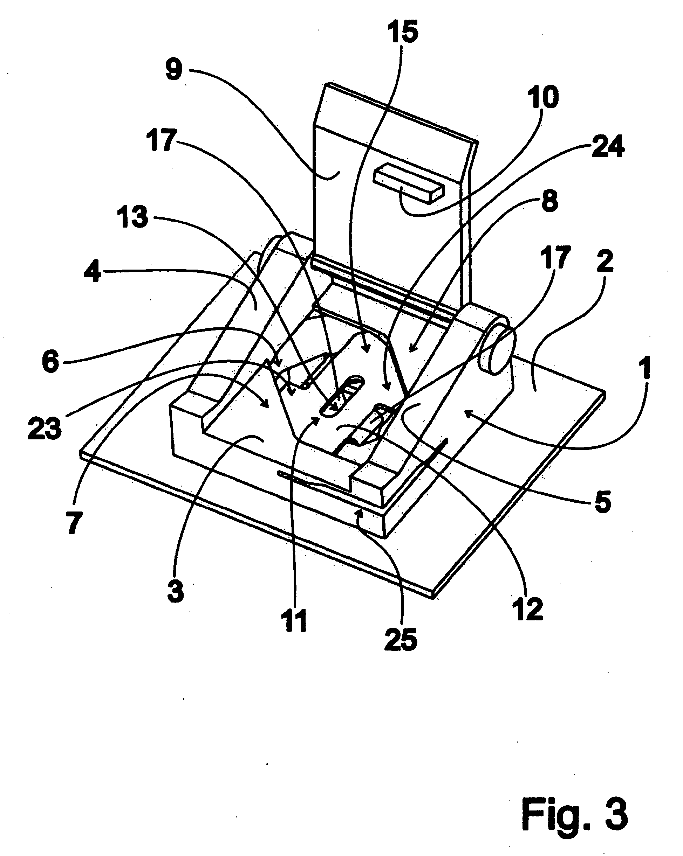

Fig. 3 zeigt das Ausführungsbeispiel gemäß Fig. 1 mit der Befestigungsklammer 11 gemäß Fig. 2 in einer gegenüber der Einlegestellung gemäß Fig. 1 um 45 Grad gedrehten Freigabestellung, in der die Seitenlappen 23, 24 durch die Eckabschnitte 7, 8 abschnittsweise überdeckt sind. Dabei greifen die Rastsicken 16 in Vertiefungen der Eingriffstrukturen ein, so dass zum Zurückdrehen der Befestigungsklammer 11 von der Freigabestellung gemäß Fig. 3 in die Einlegestellung gemäß Fig. 1 ein gewisser Sicherungswiderstand zu überwinden ist.

Zweckmäßigerweise wird zum Bewegen der Befestigungsklammer 11 zwischen der Einlegestellung gemäß Fig. 1 und der Freigabestellung gemäß Fig. 3 die Klinge eines Schraubendrehers in die Konturausnehmung 13 eingeführt und der Schraubendreher entsprechend gedreht. Weiterhin lässt sich Fig. 3 entnehmen, dass zum Aufnehmen der Randabschnitte 14, 15 in einander gegenüberliegenden Eckbereichen der Grundplatte 3 Aufnahmeschlitze 25 ausgebildet sind.

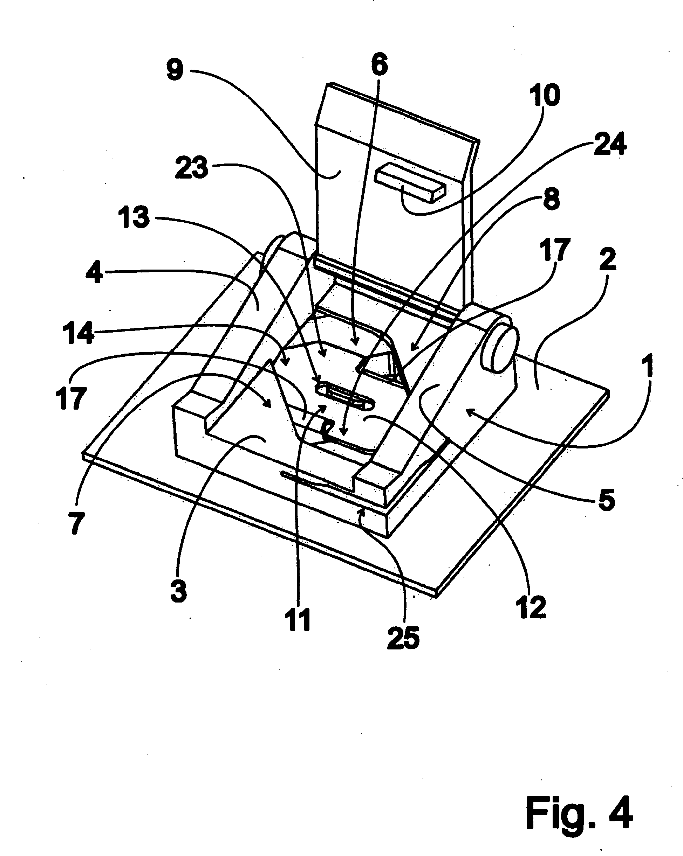

Fig. 4 zeigt in einer perspektivischen Ansicht des Ausführungsbeispiels gemäß Fig. 1 mit der Befestigungsklammer 11 gemäß Fig. 2 in einer gegenüber der Freigabestellung gemäß Fig. 3 um 90 Grad gedrehten Blockierstellung, in der die Klammerarme 18, 19 das nicht dargestellte Trägerteil hintergreifen und deren Endabschnitte 22 an den dem Lagerteil 1 gegenüberliegenden rückseitigen Randbereichen der Trägerteilausnehmung anliegen. Auch in der Blockierstellung gemäß Fig. 4 greifen die Rastsicken 16 in Vertiefungen der Eingriffstrukturen ein, so dass zum Bewegen der Befestigungsklammer 11 von der Blockierstellung gemäß Fig. 4 zurück in die Freigabestellung gemäß Fig. 3 ebenfalls ein Lösewiderstand zu überwinden ist.

Weiterhin lässt sich der Darstellung gemäß Fig. 4 entnehmen, dass in der Blockierstellung der Befestigungsklammer 11 die Konturausnehmung 13 und die Blockierrippe 10 so angeordnet sind, dass bei Überführen der Abdeckklappe 9 von der geöffneten Stellung gemäß Fig. 4 in die bündig mit den von der Grundplatte 3 abgewandten Deckseiten der Seitenwand 4, 5 abschließende Schließstellung die Blockierrippe 10 in die Konturausnehmung 13 eingreift und damit die Befestigungsklammer 11 in der Blockierstellung fixiert.

Die Blockierstellung gemäß Fig. 4 ist zweckmäßigerweise auch die Anlieferstellung, so die erfindungsgemäße Vorrichtung ohne vorherige Manipulationen zum direkten Herstellen der Verbindung zwischen dem Anbauteil 2 und dem Trägerteil durch die Ausnehmungen des Anbauteiles 2 und des Trägerteiles durchführbar ist.

Zweckmäßigerweise sind die Seitenwände 4, 5 und die Abdeckklappe 9 mit in den Figuren nicht dargestellten Sicherungsmitteln ausgebildet, die eine Abheben der Abdeckklappe 9 aus der Schließstellung nur aufgrund zielgerichteter Manipulation beispielsweise dem Aufwänden einer gegenüber der zum freien Schwenken der Abdeckklappe 9 wesentlich erhöhten Öffnungskraft gestatten. Dadurch ist eine zuverlässige Sicherung der Befestigungsklammer 11 in der Blockierstellung erzielt.

## Patentansprüche

1. Vorrichtung zum Befestigen eines Anbauteiles (2) an einem Trägerteil mit einer Befestigungsklammer (11), die über eine flache Deckplatte (12) und an gegenüberliegenden Seiten an die Deckplatte (12) angesetzte Klammerarme (18, 19) verfügt, und mit einem mit der Befestigungsklammer (11) verbindbaren Lagerteil (1), **dadurch gekennzeichnet, dass** das Lagerteil (1) einen Aufnahmeraum (6) aufweist, in den die Deckplatte (12) der Befestigungsklammer (11) zwischen einer Verriegelungsstellung, in der die Klammerarme (18, 19) das Trägerteil hintergreifen, und einer Freigabestellung, in der die Klammerarme (18, 19) mit dem Trägerteil eingriffsfrei sind, drehbar gelagert ist.

2. Vorrichtung nach Anspruch 1, **dadurch gekennzeichnet, dass** die Deckplatte (12) mit über Längsränder überstehenden Seitenlappen (23, 24) ausgebildet ist.

3. Vorrichtung nach Anspruch 1 oder Anspruch 2, **dadurch gekennzeichnet, dass** der Aufnahmeraum (6) randseitig Aufnahmeschlitze (25) zur Aufnahme von Randabschnitten (14, 15) der Deckplatte (12) aufweist.

4. Vorrichtung nach einem der Ansprüche 1 bis 3, **dadurch gekennzeichnet, dass** das Lagerteil (1) und die Deckplatte (12) mit Eingriffstrukturen (7, 8, 16) ausgebildet sind, die in der Verriegelungsstellung und der Freigabestellung lösbar miteinander in Eingriff sind.

5. Vorrichtung nach Anspruch 4, **dadurch gekennzeichnet, dass** die Eingriffstrukturen Erhebungen (16) und Vertiefungen aufweisen, die komplementär zueinander ausgebildet sind.

6. Vorrichtung nach einem der Ansprüche 1 bis 5, **dadurch gekennzeichnet, dass** die Deckplatte (12) eine Konturausnehmung (13) aufweist.

7. Vorrichtung nach Anspruch 6, **dadurch gekennzeichnet, dass** das Lagerteil (1) einen Blockiervorsprung (10) aufweist, der komplementär zu der Konturausnehmung (13) der Deckplatte (12) ausgebildet und in der Verriegelungsstellung mit der Konturausnehmung (13) in Eingriff bringbar ist, so dass eine Drehung der Befestigungsklammer (11) von der Verriegelungsstellung in die Freigabestellung blockiert ist.

8. Vorrichtung nach Anspruch 7, **dadurch gekennzeichnet, dass** der Blockiervorsprung (10) an einer schwenkbar mit dem Lagerteil (1) verbundenen Abdeckklappe (9) angeformt ist.

9. Vorrichtung nach Anspruch 8, **dadurch gekennzeichnet, dass** die Abdeckklappe (9) bei Eingriff des Blockiervorsprungs (10) mit der Konturausnehmung (13) den Aufnahmeraum (6) an seiner dem Trägerteil gegenüberliegenden Seite abdeckt.

10. Vorrichtung nach einem der Ansprüche 2 bis 9, **dadurch gekennzeichnet, dass** die Deckplatte (12) der Befestigungsklammer (11) in einer Einlegestellung eingriffsfrei mit den Aufnahmeschlitzen (25) ist.

## Claims

1. Device for fastening an add-on part (2) to a support part comprising a fastening clip (11) which has a flat top plate (12) and clamp arms (18, 19) attached to opposite sides of the top plate (12), and comprising a bearing part (1) which can be connected to the fastening clip (11), **characterized in that** the bearing part (1) has a receptacle (6) in which the top plate (12) of the fastening clip (11) is rotatably mounted between a locking position, in which the clamp arms (18, 19) grip behind the support part, and a release position in which the clamp arms (18, 19) do not engage the support part.

2. Device according to Claim 1, **characterized in that** the top plate (12) is formed with side flaps (23, 24) projecting beyond the longitudinal edges.

3. Device according to Claim 1 or Claim 2, **characterized in that** the receptacle (6) has, at the edge, receiving slots (25) for receiving edge sections (14, 15) of the top plate (12).

4. Device according to any of Claims 1 to 3, **characterized in that** the bearing part (1) and the top plate (12) are formed with engaging structures (7, 8, 16) which detachably engage one another in the locking position and the release position.

5. Device according to Claim 4, **characterized in that** the engaging structures have elevations (16) and indentations which are formed so as to be complementary to one another.

6. Device according to any of Claims 1 to 5, **characterized in that** the top plate (12) has a cut-out (13).

7. Device according to Claim 6, **characterized in that** the bearing part (1) has a blocking projection (10) which is formed so as to be complementary to the cut-out (13) of the top plate (12) and can be made to engage the cut-out (13) in the locking position, so that a rotation of the fastening clip (11) from the locking position to the release position is blocked.

8. Device according to Claim 7, **characterized in that** the blocking projection (10) is formed on a cover flap (9) pivotably connected to the bearing part (1).

9. Device according to Claim 8, **characterized in that**, when the blocking projection (10) engages the cut-out (13), the cover flap (9) covers the receptacle (6) on its side opposite the support part.

10. Device according to any of Claims 2 to 9, **characterized in that** the top plate (12) of the fastening clip (11) does not engage the receiving slots (25) in an insertion position.

## Revendications

1. Dispositif de fixation d'un élément rapporté (2) sur un élément faisant office de support au moyen d'une agrafe de fixation (11) qui se compose d'une plaquette de recouvrement plate (12) et de segments d'agrafage (18, 19) disposés attenants à des côtés diamétralement opposés de la plaquette de recouvrement (12) et au moyen d'un élément formant portée d'appui (1) destiné à être raccordé à l'agrafe de fixation (11), **caractérisé en ce que** l'élément formant portée d'appui (1) comporte un gabarit de réception (6) dans lequel la plaquette de recouvrement (12) de l'agrafe de fixation (11) est montée avec la possibilité d'être déplacée par un mouvement de rotation entre une position de verrouillage, dans laquelle les segments d'agrafage (18, 19) viennent cramponner par le dessous l'élément faisant office de support et une position de dégagement, dans laquelle les segments d'agrafage (18, 19) ne sont pas en prise de cramponnement avec l'élément faisant office de support.

2. Dispositif selon la revendication 1, **caractérisé en ce que** la plaquette de recouvrement (12) est munie de pattes de rive (23, 24) faisant saillie au-dessus de bords longitudinaux.

3. Dispositif selon la revendication 1 ou la revendication 2, **caractérisé en ce que** le gabarit de réception (6) comporte au niveau de ses rives des fentes de réception (25) dans lesquelles viennent s'insérer des portions de rive (14, 15) de la plaquette de recouvrement (12).

4. Dispositif selon l'une des revendications 1 à 3, **caractérisé en ce que** l'élément formant portée d'appui (1) et la plaquette de recouvrement (12) sont munis de structures d'engagement en prise d'accrochage (7, 8, 16) qui sont en prise d'encastrement réciproque dans la position de verrouillage et peuvent être désolidarisées la position de dégagement.

5. Dispositif selon la revendication 4, **caractérisé en ce que** les structures d'engagement en prise d'accrochage comportent des protubérances (16) et des concavités dont la configuration respective est étudiée pour venir en correspondance d'accouplement.

6. Dispositif selon l'une des revendications 1 à 5, **caractérisé en ce que** la plaquette de recouvrement (12) comporte un évidement profilé (13).

7. Dispositif selon la revendication 6, **caractérisé en ce que** l'élément formant portée d'appui (1) comporte une saillie de blocage (10), dont la configuration est étudiée pour venir en correspondance d'accouplement avec celle de l'évidement profilé (13) de la plaquette de recouvrement (12) et qui, dans la position de verrouillage, est destinée à venir en prise d'engagement avec l'évidement profilé (13), de telle sorte qu'il est impossible de faire passer , par un mouvement de rotation, l'agrafe de fixation (11) de sa position de verrouillage dans sa position de dégagement.

8. Dispositif selon la revendication 7, **caractérisé en ce que** la saillie de blocage (10) est réalisée solidaire par formage d'un couvercle (9) raccordé rabattable par une liaison articulée à l'élément formant portée d'appui (1).

9. Dispositif selon la revendication 8, **caractérisé en ce que**, lorsque la saillie de blocage (10) est amenée en prise d'engagement avec l'évidement profilé (13), le couvercle (9) vient recouvrir, au niveau de sa face opposée à l'élément faisant office de support, le gabarit de réception (6).

10. Dispositif selon l'une des revendications 2 à 9, **caractérisé en ce que** la plaquette de recouvrement (12) de l'agrafe de fixation (11) n'est pas, dans une position d'insertion, en prise d'engagement avec les fentes d'insertion (25).
